# EUROPEAN PATENT SPECIFICATION

(11) **EP 2 649 846 B1**
(45) Date of publication and mention of the grant of the patent: **04.03.2020**
(21) Application number: 11847429.5
(22) Date of filing: 28.11.2011
(51) Int. Cl.: H04W 52/02, H04B 7/26

(54) **POWER MANAGEMENT IN A WIRELESS NETWORK HAVING STATIONS WITH DIFFERENT POWER CAPABILITIES**
LEISTUNGSVERWALTUNG IN EINEM DRAHTLOSEN NETZWERK MIT STATIONEN MIT VERSCHIEDENEN LEISTUNGSEIGENSCHAFTEN
GESTION DE L'ÉNERGIE DANS UN RÉSEAU SANS FIL COMPRENANT DES STATIONS DOTÉES DE DIFFÉRENTES CAPACITÉS DE CONSOMMATION

(30) Priority: 10.12.2010 US 421966 P; 29.03.2011 US 201113074464
(43) Date of publication of application: 16.10.2013
(73) Proprietor: Intel Corporation, Santa Clara, CA 95054 (US)
(72) Inventor: PARK, Minyoung, Oregon CA 94582 (US); QI, Emily H., Washington WA 98332 (US)
(74) Representative: HGF Limited
(86) International application number: PCT/US2011/062235
(87) International publication number: WO 2012/078391

(56) References cited:
- EP-A1- 2 227 065
- US-A1- 2001 031 626
- US-A1- 2007 202 837
- US-A1- 2009 052 362
- US-A1- 2010 284 316

## Description

### BACKGROUND

Within a wireless network, some wireless stations (STAs) may include high performing stations (STAs) such as laptops, etc, which are not as constrained by battery life, and smaller typically battery powered STAs such as for example sensors, which need to last many years with small battery capacity. Currently, if an access point (AP) does not receive a packet from an associated STA within a fixed period of time (i.e. a keep-alive time period in Wi-Fi, it disconnects the STA from the wireless network, since it will assume that the station is busy. The above is true whether the STA is a high performing station, such as one powered by a large high capacity Lithium-Ion battery, or whether the STA is powered by a low capacity battery, such as, for example, a regular AA type battery. If the keep-alive time period, which is typically set by an IT administrator, is relatively short, the associated STAs would need to wake up before the keep-alive time period expires, and send a packet to maintain the association with that AP, even though they may not have any packets to send. Sending a packet merely for the purpose of maintaining associated can be costly to a STA in terms of power consumption, especially in the case of the smaller battery powered STAs.

US 2007/202837 A1 "Communication system and server apparatus and terminal apparatus" discloses, according to one embodiment, a communication system which includes a first terminal to be connected to a first communication network, assigned a terminal ID and driven by power supplied from a battery, a server apparatus to be connected to a second communication network differing from the first network, to periodically confirm presences of the first terminal and a second terminal to be connected to the second communication network, and to communication-connect between the first and the second terminals in the case of presences thereof, and a controller which makes the server apparatus monitor that the first terminal is present on the first communication network by a second period longer than a first period monitoring that the second terminal is present on the second communication network.

EP 2 227 065 A1 "Improvements to short-range wireless networks" discloses a wireless sensor network of devices including a sensor and a coordinator: the sensor comprising sensing means operable to detect values of a parameter; transmission and reception means for wireless communication with other devices in the network; and sensor control means operable to control a sleep pattern of the sensor; and the coordinator comprising transmission and reception means for wireless communication with other devices in the network; wherein the sensor transmission means is operable to transmit value information as to the parameter values and the coordinator transmission means is operable to transmit an indication of a suitable sensor sleep pattern taking into account the value information.

US 2001/031626 A1 "Power status for wireless communications" discloses A wireless local area network which is operated so that a mobile terminal transmits various power-related information over an air interface to a power status repository of the wireless local area network. For example, in one aspect of the invention, the mobile terminal transmits power status information, the power status information having an indication of whether the mobile terminal is currently operating using battery power or line power.

### BRIEF DESCRIPTION OF THE DRAWINGS

Some embodiments of the invention may be better understood by referring to the following description and accompanying drawings that are used to illustrate embodiments of the invention. In the drawings:
Fig. 1a is a schematic diagram of a wireless communications network, according to an embodiment.
Fig. 1b is a schematic diagram of a STA and of an AP according to an embodiment;
Fig. 2 is a schematic depiction of a BSS Low Power Capability element (LPC element) according to an embodiment.
Fig. 3 is a flow-chart of a method of power saving in wireless network in accordance with an embodiment.

### DETAILED DESCRIPTION

In the following description, numerous specific details are set forth. However, it is understood that embodiments of the invention may be practiced without these specific details. In other instances, well-known circuits, structures and techniques have not been shown in detail in order not to obscure an understanding of this description.

References to "one embodiment", "an embodiment", "example embodiment", "various embodiments", etc., indicate that the embodiment(s) of the invention so described may include particular features, structures, or characteristics, but not every embodiment necessarily includes the particular features, structures, or characteristics. Further, some embodiments may have some, all, or none of the features described for other embodiments.

In the following description and claims, the terms "coupled" and "connected," along with their derivatives, may be used. It should be understood that these terms are not intended as synonyms for each other. Rather, in particular embodiments, "connected" is used to indicate that two or more elements are in direct physical or electrical contact with each other. "Coupled" is used to indicate that two or more elements co-operate or interact with each other, but they may or may not have intervening physical or electrical components between them.

As used in the claims, unless otherwise specified the use of the ordinal adjectives "first", "second", "third", etc., to describe a common element, merely indicate that different instances of like elements are being referred to, and are not intended to imply that the elements so described must be in a given sequence, either temporally, spatially, in ranking, or in any other manner.

Various embodiments of the invention may be implemented in one or any combination of hardware, firmware, and software. The invention may also be implemented as instructions contained in or on a computer-readable medium, which may be read and executed by one or more processors to enable performance of the operations described herein. A computer-readable medium may include any mechanism for storing information in a form readable by one or more computers. For example, a computer-readable medium may include a tangible storage medium, such as but not limited to read only memory (ROM); random access memory (RAM); magnetic disk storage media; optical storage media; a flash memory device, etc.

The term "wireless" may be used to describe circuits, devices, systems, methods, techniques, communications channels, etc., that communicate data by using modulated electromagnetic radiation through a non-solid medium. The term does not imply that the associated devices do not contain any wires. A wireless device may comprise at least one antenna, at least one radio, at least one memory, and at least one processor, where the radio transmits signals through the antenna that represent data and receives signals through the antenna that represent data, while the processor may process the data to be transmitted and the data that has been received. The processor may also process other data which is neither transmitted nor received.

A "STA" may be embodied as a communication station, a mobile station, an advanced station, a client, a platform, a wireless communication device, a wireless AP, a modem, a wireless modem, a Personal Computer (PC), a desktop computer, a mobile computer, a laptop computer, a notebook computer, a tablet computer, a server computer, a set-top box, a handheld computer, a handheld device, a Personal Digital Assistant (PDA) device, a handheld PDA device, and/or a netbook.

Alternately or in combination, the STAs or platforms can also use signals to communicate in a wireless network such as a Local Area Network (LAN), a Wireless LAN (WLAN), a Metropolitan Area Network (MAN), a Wireless MAN (WMAN), a Wide Area Network (WAN), a Wireless WAN (WWAN), devices and/or networks operating in accordance with existing Next Generation mmWave (NGmS-D02/r0, November 28, 2008), Wireless Gigabit Alliance (WGA), IEEE 802.11, 802.11a, 802.11b, 802.11e, 802.11g, 802.11 h, 802.11i, 802.11n, 802.11ac, 802.16, 802.16d, 802.16e standards and/or future versions and/or derivatives and/or Long Term Evolution (LTE) of the above standards, a Personal Area Network (PAN), a Wireless PAN (WPAN), units and/or devices which are part of the above WLAN and/or PAN and/or WPAN networks, one way and/or two-way radio communication systems, cellular radio-telephone communication systems, a cellular telephone, a wireless telephone, a Personal Communication Systems (PCS) device, a PDA device which incorporates a wireless communication device, a Multiple Input Multiple Output (MIMO) transceiver or device, a Single Input Multiple Output (SIMO) transceiver or device, a Multiple Input Single Output (MISO) transceiver or device, a Maximum Ratio Combining (MRC) transceiver or device, a transceiver or device having "smart antenna" technology or multiple antenna technology, or the like.

Some embodiments may be used in conjunction with one or more types of wireless communication signals and/or systems, for example, Radio Frequency (RF), Infra Red (IR), Frequency-Division Multiplexing (FDM), Orthogonal FDM (OFDM), OFDMA, Time-Division Multiplexing (TDM), Time-Division Multiple Access (TDMA), Extended TDMA (E-TDMA), General Packet Radio Service (GPRS), Extended GPRS, Code-Division Multiple Access (CDMA), Wideband CDMA (WCDMA), CDMA 2000, Multi-Carrier Modulation (MDM), Discrete Multi-Tone (DMT), Bluetooth (RTM), ZigBee (TM), or the like. Embodiments may be used in various other apparatuses, devices, systems and/or networks.

In one embodiment, STAs or platforms in a wireless network may operate in accordance with one or more of the IEEE 802.11 standards and/or protocol under development by associated task groups such as 802.11 ac. A STA operating in accordance with these protocols and/or standards may require the implementation of at least two layers. One layer is the 802.11 MAC layer (i.e., OSI Data/Link Layer 2). Another layer is the 802.11 PHY layer (i.e., OSI Physical Layer 1). The MAC layer may be implemented using either or a combination of dedicated hardware and dedicated software. The PHY layer may be implemented using dedicated hardware or through software emulation.

According to some embodiments, information regarding the power capabilities of a wireless device or STA may be communicated to a wireless access point. For example, the wireless device itself may transmit such information to a wireless AP, and the information may include a Max Idle Time period corresponding to a time period during which the device is to operate in a power save mode. The device may communicate the information within an association or re-association frame to the AP with which the device is seeking association or re-association. The information may be communicated as a parameter in a BSS Low Power Capability element, which may comprise a Low Power Info field including subfields selected from a group consisting of a time period during which the device is to operate in a power save mode, the power source for the device (whether battery or line-power), the device's battery capacity, etc. The AP may receive the information and set a keep-alive time period for the device based on this information. By "keep-alive time period," what is meant in the instant description is a time period set within the AP during which a STA associated with the AP may be in a power save mode without being disconnected from the AP. After the "keep-alive time period" elapses, if the STA is still in a power save mode, the AP will disconnect the STA. When an AP receives the information regarding the power capabilities of a particular STA, the AP may set the keep-alive time period to be equal to or greater than the Max Idle period. The AP may further communicate the keep-alive time period to the device, for example in an association or re-association response frame as a BSS Max-Idle period element. In this way, the AP may apply different sets of parameters, such as different keep-alive time periods, to different classes of stations, based for example on the stations' power capabilities, thus allowing stations operating on smaller batteries to enjoy longer battery lives.

In various embodiments, a STA in a wireless network may have at least two power modes, designated herein as an active mode, in which the device is awake, and a power save mode during which the STA is placed in a non-operational low-power condition. When the STA is in the active mode, the STA is fully functional and can always transmit and receive. In the power save mode, the STA can be either in an awake state or in a doze state. When the STA is in the awake state, the STA can still transmit and receive. When the STA is in the doze state, the STA goes to sleep to reduce power consumption and cannot transmit/receive.

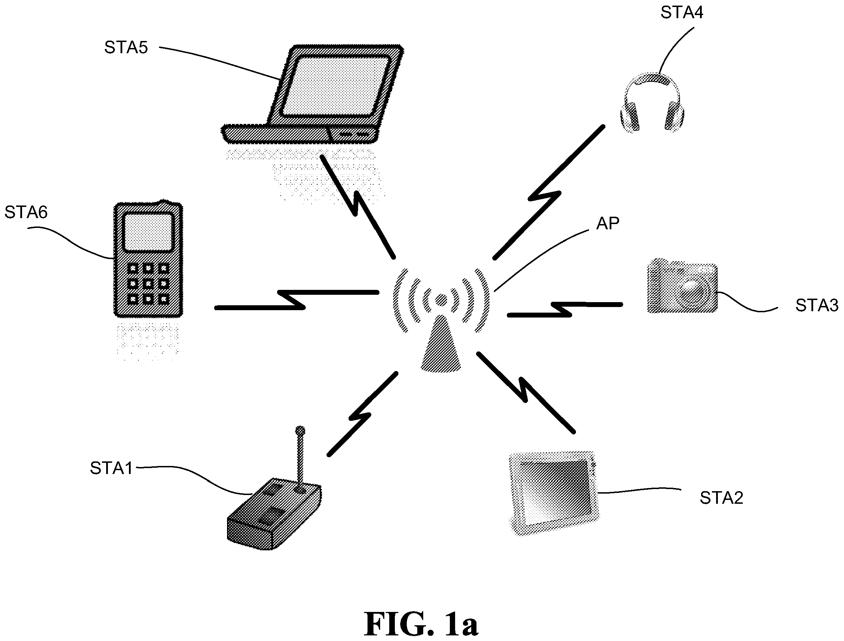

Fig. 1a shows devices in a wireless communications network according to an embodiment. Each device may be assumed to contain at least one processor and at least one radio to facilitate wireless communications. The illustrated embodiment shows an AP as various other devices as the stations (STA1-STA6) the communications for which are largely controlled by the AP. Although specific types of devices are shown (e.g. STA1 as a sensor, STA2 as a display, STA3 as a camera, STA4 as a set of headphone, STA5 as a laptop computer, and STA6 as a smartphone) these are used only as examples of typical wireless devices that may operate on smaller batteries (STA1-STA4) or on larger batteries such as lithium-ion batteries (STA5 and STA6), although operations described herein might also be used on devices that plug into external power sources as an energy saving measure. For example, the use of embodiments for plugged-in devices could advantageously reduce re-association times as well as power consumption, since the re-association could take a relatively long time and increase latency.

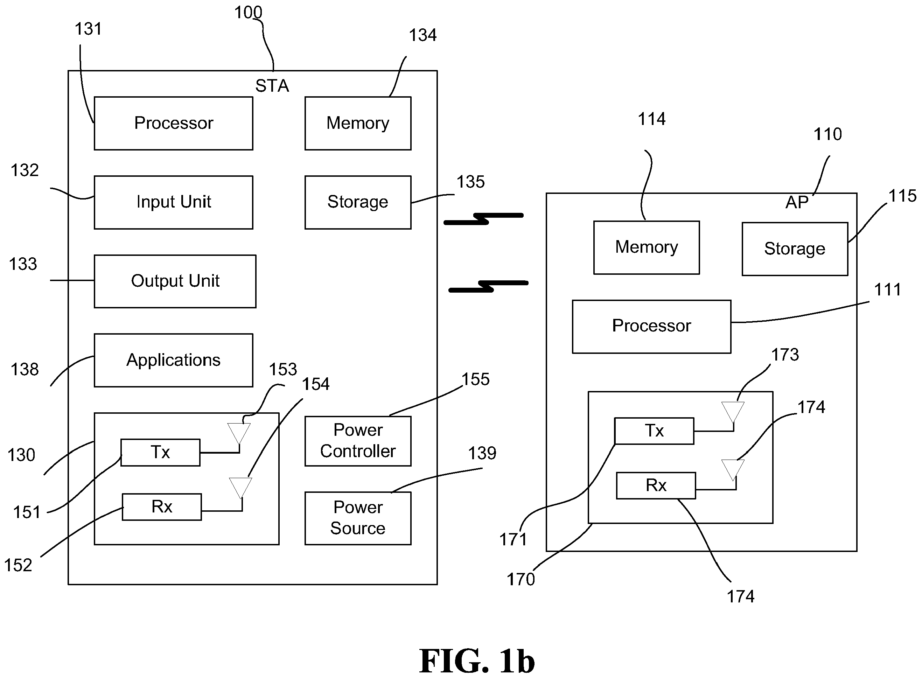

Referring next to Fig. 1b, a STA 100, such as any of the STAs of Fig. 1a, may include, for example, a processor 131, an input unit 132, an output unit 133, a memory unit 134, a storage unit 135, a communication unit 150, a power controller 155, and a power source 139, which may comprise a battery. STA 100 may optionally include other suitable hardware or software components. Input Unit 132 includes, for example, a keyboard, a keypad, a mouse, a touch-pad, a track-ball, a stylus, a microphone, or other suitable pointing device or input device. Output unit 133 includes, for example, a monitor, a screen, a Cathode Ray Tube (CRT) display unit, a Liquid Crystal Display (LCD) display unit, a plasma display unit, one or more audio speakers or earphones, or other suitable output devices. Memory unit 134 may store data processed by STA 100. Communication unit 150 includes, for example, a wireless transceiver, a wireless modem, a wireless Network Interface Card (NIC), or the like. For example, communication unit 150 includes a transmitter 151 and a receiver 152. Transmitter 151 includes, for example, a wireless Radio Frequency (RF) transmitter able to transmit wireless RF signals, blocks, frames, transmission streams, packets, messages and/or data, e.g., through an antenna 153. Receiver 152 includes, for example, a wireless Radio Frequency (RF) receiver able to receive wireless RF signals, blocks, frames, transmission streams, packets, messages and/or data, e.g., through an antenna 154. Optionally, transmitter 151 and receiver 152 may be implemented using a transceiver, a transmitter-receiver, or other suitable components. Optionally, antenna 153 and antenna 154 may be implemented using a common antenna, a common set of multiple antennas, or other suitable component(s). For example, antenna 153 and/or antenna 154 may include an internal and/or external RF antenna, a dipole antenna, a monopole antenna, an omni-directional antenna, an end fed antenna, a circularly polarized antenna, a micro-strip antenna, a diversity antenna, or other type of antenna suitable for transmitting and/or receiving wireless communication signals, blocks, frames, transmission streams, packets, messages and/or data. Power source 139 includes, for example, one or more batteries, rechargeable batteries, non-rechargeable batteries, replaceable batteries, disposable or non-replaceable batteries, internal batteries, external batteries, or other power cells able to provide electric power to one or more components of STA 100.

Optionally, a power controller 155 is able to modify operational properties of STA 100 (or components thereof) based on power-related algorithms or criteria. For example, power controller 155 is able to turn off, turn on, enable, disable, connect and/or disconnect one or more components of STA 100 and is able to command STA 100 or components thereof to go into a power-saving mode.

AP 110 may be or may include, for example, a processor 111, a memory unit 114, a storage unit 115, and a communication unit 170. The communication unit 170 may include, for example, a transmitter 171 associated with an antenna 173, and a receiver 172 associated with an antenna 174. Like devices as between AP 110 and STA 100 may be similar in properties or functionality as described above with respect to components of STA 100.

In some embodiments, some or all of the components of STA 100 and/or of AP 110 may be enclosed in a common housing, packaging, or, the like, and may be interconnected or operably associated using one or more wired or wireless links. In other embodiments, components of STA 100 and/or of AP 110 may be distributed among multiple or separate devices or locations.

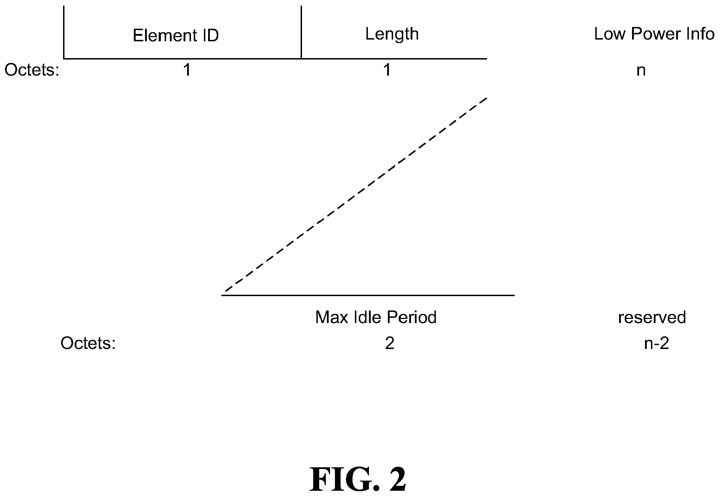

Referring now to Fig. 2, a schematic depiction of a BSS Low Power Capability (LPC) element is shown. The LPC element according to some embodiments may be used to convey information of a STA regarding its power capabilities, such as information selected from a group consisting of a time period during which the STA is to operate in a power save mode, the power source for the STA (whether battery or line-power), the STA's battery capacity, etc. Thus, by "power capabilities," what is meant is a set of capabilities related to a device's need to consume power and ability to conserve power. An "element" as used herein refers to a portion of a BSS communication frame, that is, a portion of a block of communication protocol within a BSS. The illustrated embodiment of a LPC element suggests specific fields devoted to specific purposes occurring within discrete time periods. Other embodiments may use more, fewer or different time periods with different fields and/or purposes. In the embodiment shown, the first field corresponds to an Element ID field, which may comprise a fixed value identified in the LPC element following the Element ID field may be a Length field, which conveys information regarding the length of the field that follows, that is, the length of the Low Power Info field. The Low Power Info field in turn may include subfields representing information regarding a STA's power capabilities as noted above. Thus, the subfields may be selected from a group consisting of: at time period during which a STA is to operate in a power save mode (Max Idle period for the STA), the power source for the STA (whether battery or line-power), the STA's battery capacity, etc. The Max idle period may be expressed in various ways, such as but not limited to: 1) the number of units of time, with the duration of each unit of time (e.g.: a microsecond) being predetermined and understood by both the STA and AP, or indicated in the LPC element; 2) the start time for the time period and the end time for the time period; etc.

If the Max Idle period subfield is present in the Low Power Info field of the LPC element, the STA is asking the AP to set the keep-alive time period allocated to that STA based on the Max Idle period. The AP may then set the keep-alive time period to be equal to or greater than the Max Idle period, the result being that the particular STA that sent the LPC element can remain in the power save mode for a period of time that is not fixed as set by the AP administrator, but that is determined by the power capabilities and requirements of that particular STA. As a result, the STA can remain in the power save mode for a longer period of time, thus resulting in a longer battery life for the STA as compared with a situation where the keep-alive time period is fixed within the AP. If the AP can support a Max Idle time period in the LPC element in the association or re-association frame as noted above, the AP may then set an equal or greater value for the keep-alive time period in the BSS Max-Idle period element in the association or re-association response frame. In that case, a power controller of the STA, similar for example to STA 100 of Fig. 1b including power controller 155, may be adapted to control the power states of the STA based on the BSS Max-Idle period element in the association or re-association response frame received from the AP. For an AP that does not support the Max Idle time period in the LPC element, the AP may for example send the Max Idle period it can support to the STA. It is then up to the STA to decide what to do next. If the STA really needs a longer Max Idle period than that can be supported by the AP, it may try to find another AP that can support the required longer Max Idle period. The STA may also just associate to the original AP and follow the shorter Max Idle period which the AP sent in the response frame, knowing that the STA will not have the expected battery life. In addition, should the STA move to a new AP while in a power save mode, if the original AP that sent the BSS Max Idle period and the new AP are both managed by a common controller, then the BSS Max Idle period for the STA may be stored across AP's managed by the controller. In such a case, if the STA moves, it may not need to re-associate with the AP and still maintain the Max idle period.

An AP according to an embodiment is not limited to one which will either set a keep-alive time period based on power capability information, or will impose its own predetermined keep-alive time period. Thus, an AP according to an embodiment may be adapted to accommodate both a STA that cannot and a STA that can transmit information regarding its power capabilities. In this way, a wireless network may be able to advantageously accommodate different types of STAs, including adjusting keep-alive time periods based on any corresponding power capability information transmitted to it.

Advantageously, embodiments allow the STAs with small battery capacity, such as, for example, a STA with a battery capacity roughly from about 200 mAh (such as a coin-cell battery) to about 3000 mAh (such as a Lithium AA battery) to inform their limitations and capabilities to the AP, so that the AP can treat them differently from other, less battery power constrained stations. As an example, one embodiment allows different classes of stations to use different Max Idle Period values. For example, according to an embodiment, STAs with very low duty cycles (such as STAs adapted to transmit a packet every few minutes to every tens of minutes) may have longer Max Idle Periods than STAs whose duty cycles do not fall within the given range. The stations with small battery capacity can ask for longer Max Idle periods than the other more capable or more active stations, and can thus sleep longer without being disconnected from the AP.

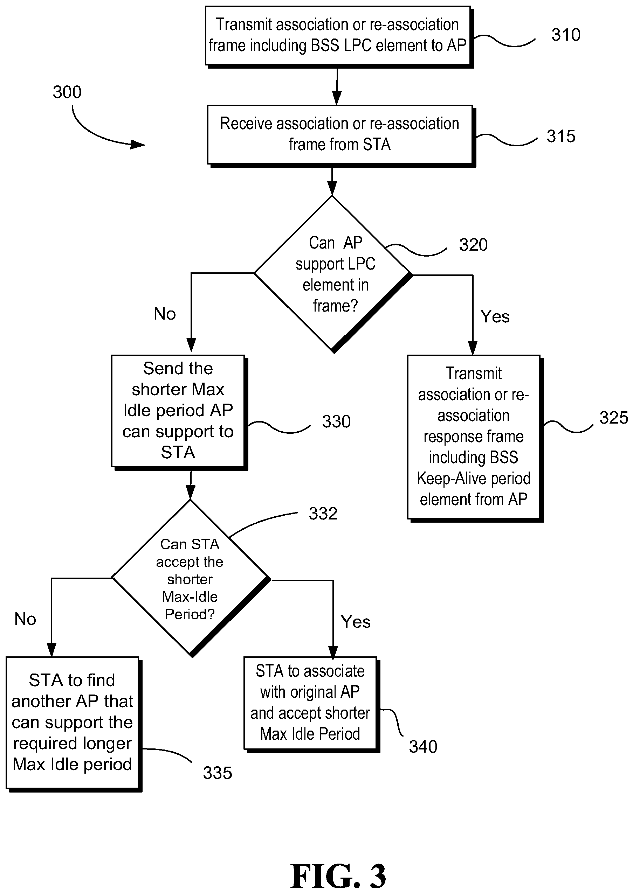

Referring now to Fig. 3, an exemplary schematic depiction is made in flowchart form of a method embodiment. In flow diagram 300, at 310 a STA may transmit an association or re-association frame including a BSS LPC element to an AP. As noted before the LPC element would include information regarding the power capabilities of the STA, such as for example, a Max Idle period, the power source for the STA (whether battery or line-power), the STA's battery capacity, etc. An AP may receive that frame at 315 and determine at 320 whether it can support the LPC element within the received frame. If the AP determines that it can support the LPC element within the received frame, the AP may at 325 transmit an association or re-association response frame to the STA in a BSS Max Idle period element. The Keep-Alive period may be equal to or greater than a Max Idle period communicated by the STA.

However, referring still to Fig. 3, if the AP determines that I cannot support the LPC element in the received frame, the AP may for example at 330 send the Max Idle period it can support to the STA. It is then up to the STA to decide what to do next, as indicated at block 332. If the STA really needs a longer Max Idle period than that can be supported by the AP, it may try at 335 to find another AP that can support the required longer Max Idle period. The STA may in the alternative at 340 just associate to the original AP and follow the shorter Max Idle period which the AP sent in the response frame, knowing that the STA will not have the expected battery life.

The foregoing description is intended to be illustrative and not limiting. Variations will occur to those of skill in the art. Those variations are intended to be included in the various embodiments of the invention, which are limited only by the scope of the following claims.

## Claims

1. A device (100) for communicating in a wireless network, the device (100) comprising a processor (131), a memory (134), and a radio (130), wherein the device (100) is configured to communicate to an access point, AP, (110) information that includes a Max Idle time period corresponding to a time period set within the AP (110) during which the device (100) may be in a power save mode without being disconnected from the AP (110), wherein in the power save mode, the device (100) is to selectively transmit to the AP (110) and selectively refrain from transmission to the AP (110), and wherein the device (100) is configured to communicate the information to the AP (110) within an association or re-association frame.

2. The device (100) of claim 1, wherein the device (100) is configured to transmit a request frame to the AP (110), the request frame including the information in a first element indicating a requested time period for the device (100) to be allowed to remain in the power save mode, the device (100) to process a response frame from the AP (110), the response frame comprising a second element indicating a selected time period for the device (100), wherein during the selected time period the device (100) is allowed to remain in the power save mode without being disconnected by the AP (110).

3. The device (100) of claim 2, wherein the first element comprises the Max Idle Period field having a first value to indicate the requested time period, and the second element comprises the Max Idle Period field having a second value to indicate the selected time period for the device (100).

4. The device (100) of claim 2 or 3, wherein the selected time period is based on the requested time period and a type of the device (100).

5. The device (100) of any one of claims 1-4, wherein the Max Idle time period corresponds to a keep alive time period set within the AP (110), and wherein the keep alive time period is a time period during which the device (100) is to selectively transmit frames to the AP (110) and selectively refrain from transmission of frames to the AP (110) without being disassociated.

6. The device (100) of any one of claims 1-5, wherein the device (100) is configured to communicate the information as a parameter in a BSS Low Power Capability element.

7. The device (100) of claim 6, wherein the BSS Low Power Capability element is a portion of a BSS communication frame, which is a portion of a block of a communication protocol within a BSS.

8. A wireless access point (110) for communicating in a wireless network, the access point (110) comprising a processor (111), a memory (114), and a radio (170), wherein the access point (110) is arranged to receive from a wireless device (100) information that includes a Max Idle time period corresponding to a time period set within the access point (110) during which the wireless device (100) may be in a power save mode without being disconnected from the access point (110), wherein in the power save mode the wireless device (100) is to be allowed to selectively transmit to the access point (100) and selectively refrain from transmission to the access point (110), and wherein the access point (110) is arranged to receive the information from the wireless device (100) within an association or re-association frame.

9. The access point (110) of claim 8, wherein the access point (110) is arranged to receive from the wireless device (100) a request frame comprising the information in a first element indicating a requested time period for the wireless device (100) to be allowed to remain in the power save mode, the access point (110) to determine a selected time period for the wireless device (100) and to transmit to the wireless device (100) a response frame comprising a second element indicating the selected time period, wherein during the selected time period the access point (110) is to allow the wireless device (100) to remain in the power save mode without being disconnected from the access point (110).

10. The access point (110) of claim 9, wherein the first element comprises a Max Idle Period field having a first value to indicate the requested time period, and the second element comprises the Max Idle Period field having a second value to indicate the selected time period for the wireless device (100).

11. The access point (110) of claim 9 or 10, wherein the access point (110) is configured to determine the selected time period based on the requested time period and a type of the wireless device (100).

12. A method of communicating in a wireless network comprising communicating from a wireless device (100) to an access point, AP, (110) information that includes a Max Idle time period corresponding to a time period set within the AP (110) during which the wireless device (100) may be in a power save mode without being disconnected from the AP (100), wherein in the power save mode, the wireless device (100) is to be allowed to selectively transmit to the AP (110) and selectively refrain from transmission to the AP (110), and wherein the wireless device (100) is to communicate the information to the AP (110) within an association or re-association frame.

13. The method of claim 12, comprising transmitting a request frame to the AP (110), the request frame including the information in a first element indicating a requested time period for the wireless device (100) to be allowed to remain in the power save mode; and processing a response frame from the AP (110), the response frame comprising a second element indicating a selected time period for the wireless device (100), wherein during the selected time period the wireless device (100) is allowed to remain in the power save mode without being disconnected by the AP (110).

14. A computer readable medium carrying code for controlling a computer to carry out the method of any one of claims 12-13.

## Patentansprüche

1. Vorrichtung (100) zum Kommunizieren in einem drahtlosen Netzwerk, die Vorrichtung (100) umfassend einen Prozessor (131), einen Speicher (134) und ein Funkgerät (130), wobei die Vorrichtung (100) konfiguriert ist zum Kommunizieren, an einen Zugangspunkt, AP, (110), von Informationen, die eine Zeitperiode maximaler Inaktivität enthalten, korrespondierend mit einer in dem AP (110) eingestellten Zeitperiode, während der die Vorrichtung (100) in einem Energiesparmodus sein kann, ohne von dem AP (110) abgetrennt zu sein, wobei die Vorrichtung (100) in dem Energiesparmodus selektiv an den AP (110) übertragen soll und selektiv von Übertragung an den AP (110) absehen soll, und wobei die Vorrichtung (100) konfiguriert ist, die Informationen an den AP (110) innerhalb eines Assoziations- oder Neuassoziationsrahmens zu kommunizieren.

2. Vorrichtung (100) nach Anspruch 1, wobei die Vorrichtung (100) konfiguriert ist, einen Anforderungsrahmen an den AP (110) zu übertragen, wobei der Anforderungsrahmen die Informationen in einem ersten Element enthält, das eine angeforderte Zeitperiode für die Vorrichtung (100) angibt, die der Vorrichtung (100) gestattet sein soll, in dem Energiesparmodus zu bleiben, wobei die Vorrichtung (100) einen Antwortrahmen von dem AP (110) verarbeiten soll, der Antwortrahmen umfassend ein zweites Element, das eine ausgewählte Zeitperiode für die Vorrichtung (100) angibt, wobei der Vorrichtung (100) während der ausgewählten Zeitperiode gestattet ist, in dem Energiesparmodus zu bleiben, ohne durch den AP (110) abgetrennt zu werden.

3. Vorrichtung (100) nach Anspruch 2, wobei das erste Element das Feld Maximale Inaktivitätsperiode umfasst, das einen ersten Wert aufweist, um die angeforderte Zeitperiode anzugeben, und wobei das zweite Element das Feld Maximale Inaktivitätsperiode umfasst, das einen zweiten Wert aufweist, um die ausgewählte Zeitperiode für die Vorrichtung (100) anzugeben.

4. Vorrichtung (100) nach Anspruch 2 oder 3, wobei die ausgewählte Zeitperiode auf der angeforderten Zeitperiode und einem Typ der Vorrichtung (100) basiert.

5. Vorrichtung (100) nach einem der Ansprüche 1-4, wobei die Zeitperiode maximaler Inaktivität mit einer innerhalb des AP (110) eingestellten Erhaltungszeitperiode korrespondiert, und wobei die Erhaltungszeitperiode eine Zeitperiode ist, während der die Vorrichtung (100) selektiv Rahmen an den AP (110) übertragen soll und selektiv von der Übertragung von Rahmen an den AP (110) absehen soll, ohne abgekoppelt zu sein.

6. Vorrichtung (100) nach einem der Ansprüche 1-5, wobei die Vorrichtung (100) konfiguriert ist, die Informationen als einen Parameter in einem BSS-Element niedriger Leistungsfähigkeit zu kommunizieren.

7. Vorrichtung (100) nach Anspruch 6, wobei das BSS-Element niedriger Leistungsfähigkeit ein Abschnitt eines BSS-Kommunikationsrahmens ist, der ein Abschnitt eines Blocks eines Kommunikationsprotokolls innerhalb eines BSS ist.

8. Drahtloser Zugangspunkt (110) zum Kommunizieren in einem drahtlosen Netzwerk, der Zugangspunkt (110) umfassend einen Prozessor (111), einen Speicher (114) und ein Funkgerät (170), wobei der Zugangspunkt (110) angeordnet ist, von der drahtlosen Vorrichtung (100) Informationen zu empfangen, die eine Zeitperiode maximaler Inaktivität enthalten, korrespondierend mit einer in dem Zugangspunkt (110) eingestellten Zeitperiode, während der die drahtlose Vorrichtung (100) in einem Energiesparmodus sein kann, ohne von dem Zugangspunkt (110) abgetrennt zu sein, wobei der Vorrichtung (100) in dem Energiesparmodus gestattet sein soll, selektiv an den Zugangspunkt (110) zu übertragen und selektiv von Übertragung an den Zugangspunkt (110) abzusehen, und wobei der Zugangspunkt (110) angeordnet ist, die Informationen von der drahtlosen Vorrichtung (100) innerhalb eines Assoziations- oder Neuassoziationsrahmens zu empfangen.

9. Zugangspunkt (110) nach Anspruch 8, wobei der Zugangspunkt (110) angeordnet ist, einen Anforderungsrahmen von der drahtlosen Vorrichtung (100) zu empfangen, umfassend die Informationen in einem ersten Element, das eine angeforderte Zeitperiode für die drahtlose Vorrichtung (100) angibt, die ihr gestattet sein soll, in dem Energiesparmodus zu bleiben, wobei der Zugangspunkt (110) eine ausgewählte Zeitperiode für die drahtlose Vorrichtung (100) bestimmen soll und einen Antwortrahmen an die drahtlose Vorrichtung (100) übertragen soll, umfassend ein zweites Element, das die ausgewählte Zeitperiode angibt, wobei der Zugangspunkt (110) der drahtlosen Vorrichtung (100) während der ausgewählten Zeitperiode gestatten soll, in dem Energiesparmodus zu bleiben, ohne von dem Zugangspunkt (110) abgetrennt zu sein.

10. Zugangspunkt (110) nach Anspruch 9, wobei das erste Element ein Feld Maximale Inaktivitätsperiode umfasst, das einen ersten Wert aufweist, um die angeforderte Zeitperiode anzugeben, und wobei das zweite Element das Feld Maximale Inaktivitätsperiode umfasst, das einen zweiten Wert aufweist, um die ausgewählte Zeitperiode für die drahtlose Vorrichtung (100) anzugeben.

11. Zugangspunkt (110) nach Anspruch 9 oder 10, wobei der Zugangspunkt (110) konfiguriert ist, die ausgewählte Zeitperiode basierend auf der angeforderten Zeitperiode und einem Typ der drahtlosen Vorrichtung (100) zu bestimmen.

12. Verfahren zum Kommunizieren in einem drahtlosen Netzwerk, umfassend Kommunizieren, von einer drahtlosen Vorrichtung (100) an einen Zugangspunkt, AP, (110), von Informationen, die eine Zeitperiode maximaler Inaktivität enthalten, korrespondierend mit einer in dem AP (110) eingestellten Zeitperiode, während der die Vorrichtung (100) in einem Energiesparmodus sein kann, ohne von dem AP (110) abgetrennt zu sein, wobei der drahtlosen Vorrichtung (100) in dem Energiesparmodus gestattet sein soll, selektiv an den AP (110) zu übertragen und selektiv von Übertragung an den AP (110) abzusehen, und wobei die drahtlose Vorrichtung (100) die Informationen an den AP (110) innerhalb eines Assoziations- oder Neuassoziationsrahmens kommunizieren soll.

13. Verfahren nach Anspruch 12, umfassend Übertragen eines Anforderungsrahmens an den AP (110), der Anforderungsrahmen die Informationen in einem ersten Element enthaltend, das eine angeforderte Zeitperiode angibt, die der drahtlosen Vorrichtung (100) gestattet sein soll, in dem Energiesparmodus zu bleiben; und Verarbeiten eines Antwortrahmens von dem AP (110), der Antwortrahmen umfassend ein zweites Element, das eine ausgewählte Zeitperiode für die drahtlose Vorrichtung (100) angibt, wobei der drahtlosen Vorrichtung (100) während der ausgewählten Zeitperiode gestattet ist, in dem Energiesparmodus zu bleiben, ohne durch den AP (110) abgetrennt zu werden.

14. Computerlesbares Medium, das Code zum Steuern eines Computers trägt, das Verfahren nach einem der Ansprüche 12-13 auszuführen.

## Revendications

1. Dispositif (100) pour communiquer dans un réseau sans fil, le dispositif (100) comprenant un processeur (131), une mémoire (134) et une radio (130), où le dispositif (100) est configuré pour communiquer à un point d'accès, AP, (110) des informations qui comprennent une période de temps d'inactivité maximale correspondant à une période de temps définie dans l'AP (110) pendant laquelle le dispositif (100) peut être dans un mode d'économie d'énergie sans être déconnecté de l'AP (110), où, dans le mode d'économie d'énergie, le dispositif (100) doit transmettre sélectivement à l'AP (110) et s'abstenir sélectivement de transmettre à l'AP (110), et où le dispositif (100) est configuré pour communiquer les informations à l'AP (110) dans une trame d'association ou de réassociation.

2. Dispositif (100) selon la revendication 1, dans lequel le dispositif (100) est configuré pour transmettre une trame de demande à l'AP (110), la trame de demande comprenant les informations dans un premier élément indiquant une période de temps demandée pour que le dispositif (100) soit autorisé à rester dans le mode d'économie d'énergie, le dispositif (100) traitant une trame de réponse provenant de l'AP (110), la trame de réponse comprenant un second élément indiquant une période de temps sélectionnée pour le dispositif (100), où, au cours de la période de temps sélectionnée, le dispositif (100) est autorisé à rester dans le mode d'économie d'énergie sans être déconnecté par l'AP (110).

3. Dispositif (100) selon la revendication 2, dans lequel le premier élément comprend le champ Période d'inactivité maximale ayant une première valeur pour indiquer la période de temps demandée, et le second élément comprend le champ Période d'inactivité maximale ayant une seconde valeur pour indiquer la période de temps sélectionnée pour le dispositif (100).

4. Dispositif (100) selon la revendication 2 ou la revendication 3, dans lequel la période de temps sélectionnée est basée sur la période de temps demandée et un type du dispositif (100).

5. Dispositif (100) selon l'une quelconque des revendications 1 à 4, dans lequel la période de temps d'inactivité maximale correspond à une période de temps dite Keep Alive définie dans l'AP (110), et où la période de temps dite Keep Alive est une période de temps pendant laquelle le dispositif (100) doit transmettre sélectivement des trames à l'AP (110) et s'abstenir sélectivement de transmettre des trames à l'AP (110) sans être dissocié.

6. Dispositif (100) selon l'une quelconque des revendications 1 à 5, dans lequel le dispositif (100) est configuré pour communiquer les informations en tant que paramètre dans un élément de capacité de faible puissance BSS.

7. Dispositif (100) selon la revendication 6, dans lequel l'élément de capacité de faible puissance BSS est une partie d'une trame de communication BSS, qui est une partie d'un bloc d'un protocole de communication dans un BSS.

8. Point d'accès sans fil (110) pour communiquer dans un réseau sans fil, le point d'accès (110) comprenant un processeur (111), une mémoire (114) et une radio (170), où le point d'accès (110) est agencé pour recevoir d'un dispositif sans fil (100) des informations qui comprennent une période de temps d'inactivité maximale correspondant à une période de temps définie dans le point d'accès (110) pendant laquelle le dispositif sans fil (100) peut être dans un mode d'économie d'énergie sans être déconnecté du point d'accès (110), où, dans le mode d'économie d'énergie, le dispositif sans fil (100) doit être autorisé à transmettre sélectivement au point d'accès (100) et à s'abstenir sélectivement de transmettre au point d'accès (110), et où le point d'accès (110) est agencé pour recevoir les informations du dispositif sans fil (100) dans une trame d'association ou de réassociation.

9. Point d'accès (110) selon la revendication 8, dans lequel le point d'accès (110) est agencé pour recevoir du dispositif sans fil (100) une trame de demande comprenant les informations dans un premier élément indiquant une période de temps demandée pour que le dispositif sans fil (100) soit autorisé à rester dans le mode d'économie d'énergie, le point d'accès (110) déterminant une période de temps sélectionnée pour le dispositif sans fil (100) et transmettant au dispositif sans fil (100) une trame de réponse comprenant un second élément indiquant la période de temps sélectionnée, où, au cours de la période de temps sélectionnée, le point d'accès (110) doit permettre au dispositif sans fil (100) de rester dans le mode d'économie d'énergie sans être déconnecté du point d'accès (110).

10. Point d'accès (110) selon la revendication 9, dans lequel le premier élément comprend un champ Période d'inactivité maximale ayant une première valeur pour indiquer la période de temps demandée, et le second élément comprend le champ Période d'inactivité maximale ayant une seconde valeur pour indiquer la période de temps sélectionnée pour le dispositif sans fil (100).

11. Point d'accès (110) selon la revendication 9 ou la revendication 10, dans lequel le point d'accès (110) est configuré pour déterminer la période de temps sélectionnée sur la base de la période de temps demandée et d'un type de dispositif sans fil (100).

12. Procédé de communication dans un réseau sans fil comprenant la communication d'un dispositif sans fil (100) à un point d'accès, AP, (110) d'informations qui comprennent une période de temps d'inactivité maximale correspondant à une période de temps définie dans l'AP (110) pendant laquelle le dispositif sans fil (100) peut être dans un mode d'économie d'énergie sans être déconnecté de l'AP (100), où, dans le mode d'économie d'énergie, le dispositif sans fil (100) doit être autorisé à transmettre sélectivement vers l'AP (110) et à s'abstenir sélectivement de transmettre vers l'AP (110), et où le dispositif sans fil (100) doit communiquer les informations à l'AP (110) dans une trame d'association ou de réassociation.

13. Procédé selon la revendication 12, comprenant la transmission d'une trame de demande à l'AP (110), la trame de demande comprenant les informations dans un premier élément indiquant une période de temps demandée pour que le dispositif sans fil (100) soit autorisé à rester dans le mode d'économie d'énergie ; et le traitement d'une trame de réponse à partir de l'AP (110), la trame de réponse comprenant un second élément indiquant une période de temps sélectionnée pour le dispositif sans fil (100), où, au cours de la période de temps sélectionnée, le dispositif sans fil (100) est autorisé à rester dans le mode d'économie d'énergie sans être déconnecté par l'AP (110).

14. Support lisible par ordinateur portant un code pour commander un ordinateur afin qu'il exécute le procédé de l'une quelconque des revendications 12 et 13.
